# EUROPÄISCHE PATENTSCHRIFT

(11) **EP 0 643 002 B1**
(45) Veröffentlichungstag und Bekanntmachung des Hinweises auf die Patenterteilung: **29.10.1997**
(21) Anmeldenummer: 94112552.8
(22) Anmeldetag: 11.08.1994
(51) Int. Cl.: B65H 19/12, B65H 67/06, B25J 18/02

(54) **Handhabungsvorrichtung mit Teleskopteil**
Manipulator with telescopic portion
Manipulateur avec partie téléscopique

(30) Priorität: 06.09.1993 DE 4330134
(43) Veröffentlichungstag der Anmeldung: 15.03.1995
(73) Patentinhaber: Focke & Co. (GmbH & Co.), 27283 Verden (DE)
(72) Erfinder: Focke, Heinz, D-27283 Verden (DE); Livotov, Pavel, Dr., D-30161 Hannover (DE)
(74) Vertreter: Bolte, Erich, Dipl.-Ing.

(56) Entgegenhaltungen:
- EP-A- 0 016 921
- DE-A- 2 839 593
- DE-U- 8 706 005
- FR-A- 2 133 671
- PATENT ABSTRACTS OF JAPAN vol. 4 no. 3 (M-87) ,11.Januar 1980 & JP-A-54 138966 (TOKICO K.K.) 27.Oktober 1979,
- PATENT ABSTRACTS OF JAPAN vol. 6 no. 124 (M-141) [1002] ,9.Juli 1982 & JP-A-57 048571 (TORAY ENGINEERING K.K.) 19.März 1982,

## Beschreibung

Die Erfindung betrifft eine Handhabungsvorrichtung für Gegenstände, insbesondere Bobinen aus gewickelten Materialbahnen, mit wenigstens einem Teleskoporgan aus einem Basis-Zylinder, mehreren ein- und ausfahrbaren, druckmittelbetätigten Teleskopzylindern und einer ebenfalls ein- und ausfahrbaren, druckmittelbetätigten Kolbenstange, die in dem inneren bzw. unteren Teleskopzylinder geführt ist, wobei das Teleskoporgan mittels eines endlichen Zugorgans einfahrbar ist, das über eine an der Kolbenstange angebrachte Umlenkrolle läuft und wobei auf wenigstens ein Ende des Zugorgans eine Zugkraft zum Einfahren des Teleskoporgans übertragbar ist.

Teleskopartige Handhabungsvorrichtungen sind in der Verpackungstechnik zunehmend von Interesse für die selbsttätige Handhabung von zu verpackenden Gegenständen, Verpackungen oder vor allem von Verpackungsmaterial. Die Handhabungsvorrichtungen, auch Roboter genannt, müssen Bewegungen von Tragorganen in verschiedenen Richtungen zulassen. Die Erfindung befaßt sich mit solchen Robotern bzw. mit den wichtigsten Elementen derselben, nämlich den teleskopartigen Handhabungsvorrichtungen.

Ein bevorzugtes Anwendungsgebiet für derartige Teleskoporgane sind in der Verpackungstechnik Vorrichtungen zum Handhaben von gewickelten Bahnen aus Verpackungsmaterial, also Bobinen. Diese werden durch einen Halter am Außenumfang oder durch einen Tragzapfen in einer Mittenöffnung erfaßt. Die Bewegbarkeit dieses Halters wird vorzugsweise durch mehrere, gesondert steuerbare Teleskoporgane bewirkt.

Ein Beispiel für eine solche Handhabungsvorrichtung ist Gegenstand von DE 42 21 052.6. Bei dieser Vorrichtung sind drei sternförmig verteilt angeordnete, langhubige Druckmittelzylinder als Halte- und Betätigungsorgane für einen Tragzapfen zur Aufnahme einer Material-Bobine vorgesehen. Es geht im vorliegenden Falle um die besondere technische Ausbildung dieser Druckmittelzylinder, aber auch um Teleskoporgane für andere Einsatzmöglichkeiten.

Eine Handhabungsvorrichtung der eingangs genannten Art ist zum Beispiel aus DE-U-87 06 005 bekannt. Der dort gezeigte Teleskopausleger besteht aus einem Grundschuß sowie drei ein- und ausfahrbaren Teleskopschüssen. Über eine Rückzugwinde sind die Teleskopschüsse einfahrbar. Ein Rückzugseil der Rückzugwinde ist über eine Rolle zu einer Kupplung geführt.

Die EP-A-0 016 921 offenbart ein Teleskopbewegungselement mit einer am Teleskoporgan angebrachten Wickelrolle. Weitere Handhabungsvorrichtungen sind aus der DE-A-28 39 593 und der DE-A-21 18 265, die die Merkmale des Oberbegriffs von Anspruch 1 enthält, bekannt.

Der Erfindung liegt die Aufgabe zugrunde, teleskopartige Handhabungsvorrichtungen bzw. deren Teleskoporgane so auszubilden, daß bei leichter Bauweise langhubige Bewegungen mit exakter Steuerung der Bewegungsvorgänge ausgeführt werden können.

Zur Lösung dieser Aufgabe ist die erfindungsgemäße Handhabungsvorrichtung durch folgende Merkmale gekennzeichnet:
a) das Zugorgan läuft über eine an der Kolbenstange mittig angebracht Umlenkrolle, wobei die Drehachse der Umlenkrolle in der Längsmittelachse des Teleskoporgans liegt,
b) das Zugorgan ist mit einem Ende fest verankert und hierzu unmittelbar mit dem Teleskoporgan verbunden, nämlich an der Außenseite des äußeren bzw. oberen Basis-Zylinders befestigt,
c) das Zugorgan ist mit dem anderen Ende auf eine Wickeltrommel aufwickelbar und von dieser abwickelbar, wobei die Wickeltrommel ebenfalls am Teleskoporgan angebracht ist, nämlich auf der zum fest verankerten Ende des Zugorgans diametral gegenüberliegenden Seite an der Außenseite des Basis-Zylinders.

Die Ausfahrbewegung wird bei dem erfindungsgemäßen Teleskoporgan durch ein Druckmittel bewirkt, vorzugsweise durch Druckluft. Die Einfahrbewegung des Teleskopteils wird überwiegend oder - vorteilhafterweise - ausschließlich durch ein Zugorgan bewirkt, welches auf das Teleskopteil eine Kraft im einfahrenden Sinne überträgt.

Das Zugorgan ist zweckmäßig ein Zahnriemen, dessen eines Ende verankert und dessen anderes Ende aufwickelbar und abwickelbar ist. Das Zugorgan wird über eine Umlenkung am freien, äußeren Ende des (äußeren) Teleskopteils gelenkt, insbesondere über ein Umlenkrad. Die Umlenkung für das Zugorgan ist mittig zur Längsachse des Teleskopteils positioniert.

Das Zugorgan wird gemäß einem weiteren Merkmal der Erfindung zur Steuerung der Ein- und Ausfahrbewegungen des Teleskopteils eingesetzt. Mit Hilfe des Zugorgans ist die genaue Position des freien Endes des Teleskopteils und dadurch die Arbeitsweise der gesamten Handhabungsvorrichtung bestimmbar.

Weiterhin bezieht sich die Erfindung auf die Ausgestaltung eines mehrteiligen Teleskopzylinders. Die ineinander gelagerten zylindrischen Teleskopteile bestehen aus (dünnwandigen) Aluminiumrohren mit Kopfteilen aus Kunststoff. Die Teleskopzylinder bzw. deren Zylinderrohre sind so ausgebildet, daß sie verdrehsicher ineinander geführt sind. Zu diesem Zweck sind jeweils die Teleskopzylinder an der Innenseite ihrer Wandungen unrund ausgebildet, insbesondere mit längs des Umfangs verteilten Abplattungen, die mit entsprechend geformten benachbarten Teleskopzylindern korrespondieren.

Mehrere, insbesondere drei in vorstehendem Sinne ausgebildete Teleskoporgane sind Teil einer Handhabungsvorrichtung, die mit Laufrollen bzw. Rollenwagen an einem Schienensystem überkopf verfahrbar sind. Die Teleskoporgane sind sternförmig verteilt an einem in besonderer Weise ausgebildeten und mit den Laufrollenwagen verbundenen Traggestell angeordnet. An diesem sind erfindungsgemäß die Einheiten für die Erzeugung von Druckluft und zur Steuerung der Teleskoporgane angebracht.

Weitere Einzelheiten der Erfindung werden nachfolgend anhand von in den Zeichnungen dargestellten Ausführungsbeispielen erläutert. Es zeigt:
- Fig. 1: eine Handhabungsvorrichtung, nämlich ein mehrteiliges Teleskoporgan, in Seitenansicht, teilweise im Schnitt,
- Fig. 2: eine Einzelheit des Teleskopzylinders gemäß Fig. 1, nämlich Abschnitte von zwei zylindrischen Teleskopteilen, im Vertikalschnitt,
- Fig. 3: einen Querschnitt durch ein Teleskoporgan in der Schnittebene III - III der Fig. 2,
- Fig. 4: eine Einzelheit im oberen Bereich eines Teleskoporgans gemäß Fig. 1 in vergrößertem Maßstab, teilweise im Schnitt,
- Fig. 5: eine aus mehreren Teleskoporganen bestehende, verfahrbare Handhabungsvorrichtung in Seitenansicht,

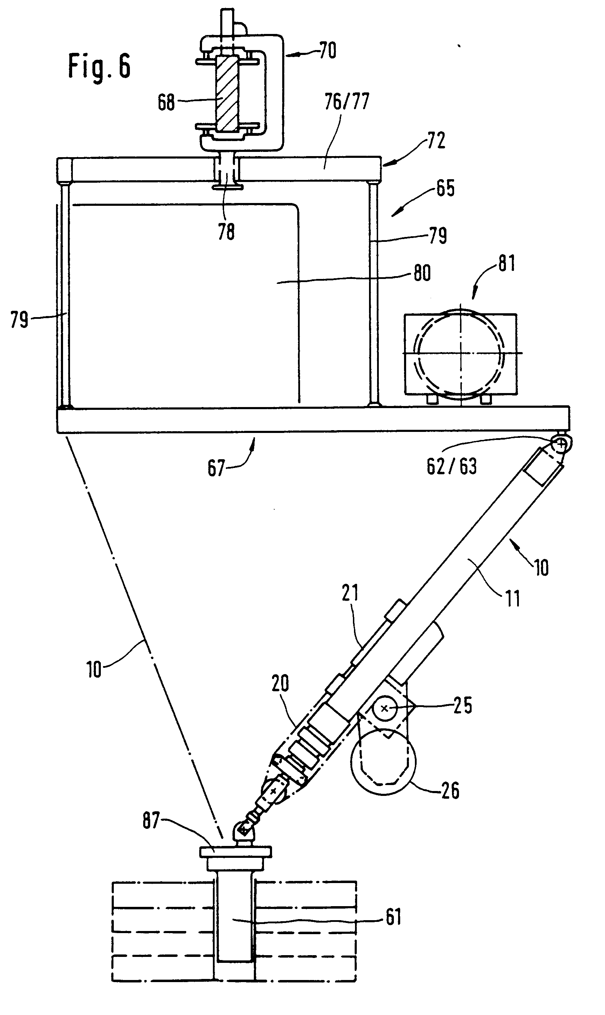

- Fig. 6: die Handhabungsvorrichtung gemäß Fig. 5 in einer um 90° versetzten Queransicht zu Fig. 5,

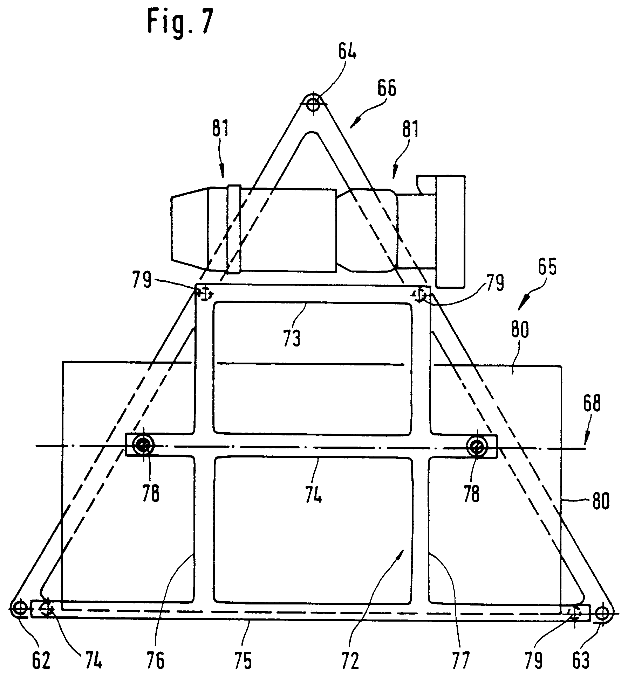

- Fig. 7: ein Traggestell der Handhabungsvorrichtung gemäß Fig. 5 und 6 im Grundriß,
- Fig. 8: eine Einzelheit des Teleskoporgans gemäß Fig. 1, nämlich einen Querschnitt in der Schnittebene VIII - VIII der Fig. 1,
- Fig. 9: einen Querschnitt mit Draufsicht in der Schnittebene IX - IX der Fig. 1.

In den Zeichnungen sind Einzelheiten einer Handhabungsvorrichtung gezeigt, die in einfachster Ausführung aus einem einzelnen Teleskoporgan 10 besteht. Für komplexe Anwendungsbereiche weist die Handhabungsvorrichtung mehrere, insbesondere drei, solcher Teleskoporgane 10 auf.

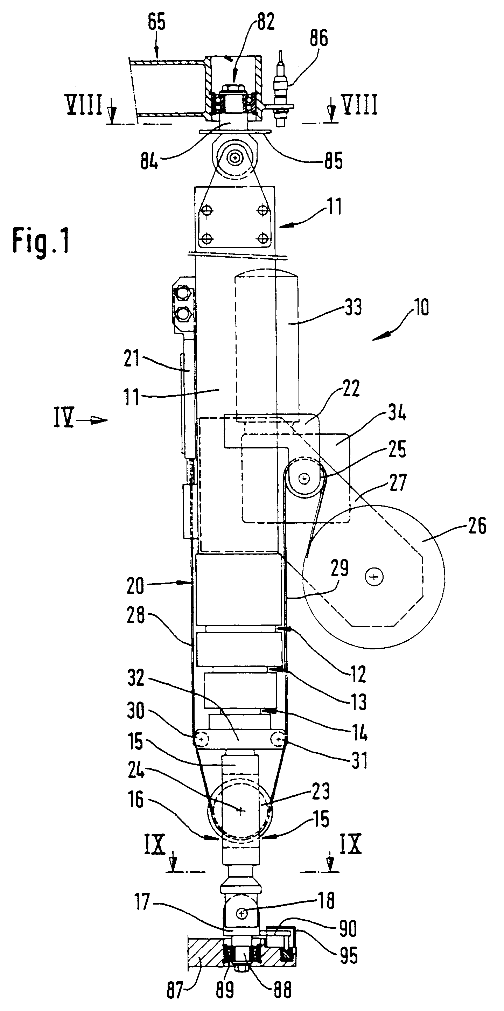

Das Teleskoporgan 10 gemäß Fig. 1 besteht aus mehreren zylindrischen Teleskopteilen, nämlich einem feststehenden bzw. in Axialrichtung unverschieblichen Basis-Zylinder 11, drei verschiebbaren Teleskopzylindern 12, 13, 14 und ein Teleskop-Endteil, nämlich eine Kolbenstange 15. Die Teleskopzylinder 12, 13, 14 sind relativ zueinander und ineinander verschiebbar. Die Kolbenstange 15 ist im (unteren) Teleskopzylinder 14 verschiebbar.

Die Kolbenstange 15 weist außerhalb des Teleskopzylinders 14 ein Endstück auf. An dessen freiem Ende kann ein zu bewegender bzw. zu betätigender Gegenstand angebracht werden. Im vorliegenden Falle handelt es sich dabei um eine Lasche 17, die über ein Bolzenlager 18 (in einer Ebene) schwenkbar mit dem Endstück 16 verbunden ist.

Das Teleskoporgan 10 wird durch ein Druckmittel, nämlich durch Druckluft, in ausfahrendem Sinne der Teleskopzylinder 12, 13, 14 und der Kolbenstange 15 beaufschlagt. Die Druckluft wird im oberen Bereich in den Basis-Zylinder 11 eingeleitet. Die Druckluft kann einen Druck von 0,5 bar bis 2 bar aufweisen.

Die entgegengesetzte Bewegung, nämlich die Einfahrbewegung der Teleskopteile, erfolgt durch ein Zugorgan 20. Dieses ist im vorliegenden Falle riemen- bzw. bandförmig ausgebildet. Konkret handelt es sich dabei um einen Zahnriemen.

Das Zugorgan ist mit einem Ende durch ein Verankerungsstück 21 fixiert. Dieses ist mit dem Basis-Zylinder 11 verbunden, und zwar in einem unteren Bereich desselben.

Das Zugorgan 20 wird über das Ende des Teleskoporgans 10 geleitet, im vorliegenden Falle über die Kolbenstange 15. Im Bereich des Endstücks 16 ist zu diesem Zweck ein Umlenkrad 23 drehbar gelagert. Das Endstück 16 ist zu diesem Zweck im Bereich des Umlenkrades 23 doppelwandig ausgebildet bzw. mit zwei im Abstand voneinander angeordneten Stegen, zwischen denen das Umlenkrad 23 mit einem Drehlager 24 angebracht ist. Die Position des Umlenkrades 23 ist so festgelegt, daß die Achse des Drehlagers 24 exakt in einer Längsmittelachse des Teleskoporgans 10 liegt, nämlich quer zu dieser. Dadurch wirken die vom Umlenkrad 23 auf das Teleskoporgan 10, nämlich auf die Kolbenstange 15 übertragenen Kräfte exakt mittig, also versatzfrei.

Das Zugorgan 20 führt vom Umlenkrad 23 zu einem weiteren Führungs- und Umlenkorgan, nämlich einem Antriebsrad 25. Dieses ist mit deutlichem Abstand vom Umlenkrad 23 ortsfest mit einem winkelförmig ausgebildeten Halter 22 am Basis-Zylinder 11 befestigt. Das Antriebsrad 25 befindet sich etwa in Höhe des Verankerungsstücks 21, jedoch auf der gegenüberliegenden Seite des Teleskoporgans 10.

Das Zugorgan 20 führt vom Antriebsrad 25 zu einem Speicher, im vorliegenden Fall zu einer Wickeltrommel 26. An dieser ist ein Ende des Zugorgans 20 befestigt. Die Wickeltrommel 26 nimmt je nach Stellung des Teleskoporgans 10 den freien Teil des Zugorgans 20 durch Aufwickeln auf. Die Wickeltrommel 26 ist zu diesem Zweck in Aufwickelrichtung belastet, insbesondere durch eine Feder (nicht gezeigt). Auch die Wickeltrommel 26 ist ortsfest gelagert, nämlich an einem mit dem Basis-Zylinder 11 verbundenen Tragarm 27. Die Wickeltrommel 26 befindet sich unterhalb des Antriebsrades 25, so daß dieses von dem Zugorgan 20 mit einem Winkel von etwa 180° umschlungen ist.

Das Zugorgan 20 wird zum Einfahren des Teleskopteile des Teleskoporgans 10 eingezogen, im vorliegenden Falle aufgewickelt. Dadurch wird über das Umlenkrad 23 eine Druckkraft auf die Kolbenstange 15 und danach auf die weiteren Teleskopteile, nämlich Teleskopzylinder 14, 13, 12 übertragen. Beim Einfahren der Teleskopteile wird ein Flaschenzugeffekt hinsichtlich der Kraftübertragung erzeugt. Ein Hub des Teleskoporgans 10 von 1 cm entspricht einer Einfahr- bzw. Wickellänge des Zugorgans 20 von 2 cm.

Die Zugkraft wird durch das Antriebsrad 25 übertragen. Bei einem als Zahnriemen ausgebildeten Zugorgan 20 sind Zähne desselben so angeordnet, daß das Zugorgan 20 mit einer glatten, zahnfreien Fläche am Umlenkrad 23 anliegt, hingegen im Bereich des Antriebsrades 25 die Zähne im Eingriff sind mit einer entsprechend geformten Anlagefläche das Antriebsrades 25.

Das Zugorgan 20 ist im Bereich des Teleskoporgans 10 so geführt, daß unter Zugkraft stehende Trums 28, 29 an einander gegenüberliegenden Seiten des Teleskoporgans 10 in einem überwiegenden Bereich parallel zueinander verlaufen. Zu diesem Zweck liegt das Zugorgan 20 an Stützelementen an, im vorliegenden Fall an Stützrollen 30, 31, die an den Enden eines quergerichteten, mit der Kolbenstange 15 oder dem unteren Teleskopzylinder 14 verbundenen Riegel 32 gelagert sind.

Das Antriebsrad 25 steht mit einem Motor 33 in getrieblicher Verbindung. Im vorliegenden Fall ist hierfür ein Winkelgetriebe 34 vorgesehen, welches mit dem darüber angeordneten Motor 33 eine schlanke, raumsparende Bauweise ermöglicht.

Das Zugorgan 20 erlaubt eine exakte Steuerung des Teleskoporgans 10 durch exakte Bestimmung der Ausfahrlänge bzw. der Position des Zugorgans 20. Zu diesem Zweck ist bei dem dargestellten Ausführungsbeispiel im Bereich des Antriebsrades 25 ein optoelektrisches Meßorgan angeordnet, nämlich ein Drehgeber bzw. Winkelschrittgeber. Dieser ermittelt anhand der Umdrehungen des Antriebsrades 25 die aus- bzw. eingefahrene Länge des Zugorgans 20 und damit die exakte Ausfahrposition des Teleskoporgans 10. Von dem (nicht gezeigten) Drehgeber wird ein Steuersignal abgeleitet für die ein- oder Ausfahrbewegung des Teleskoporgans.

Für die in Betracht kommenden Anwendungsbereiche des Teleskoporgans 10 ist von Bedeutung, daß dieses einerseits ein geringes Eigengewicht aufweist, andererseits aber hochbelastbar ist, auch bei verhältnismäßig langen Teleskopteilen.

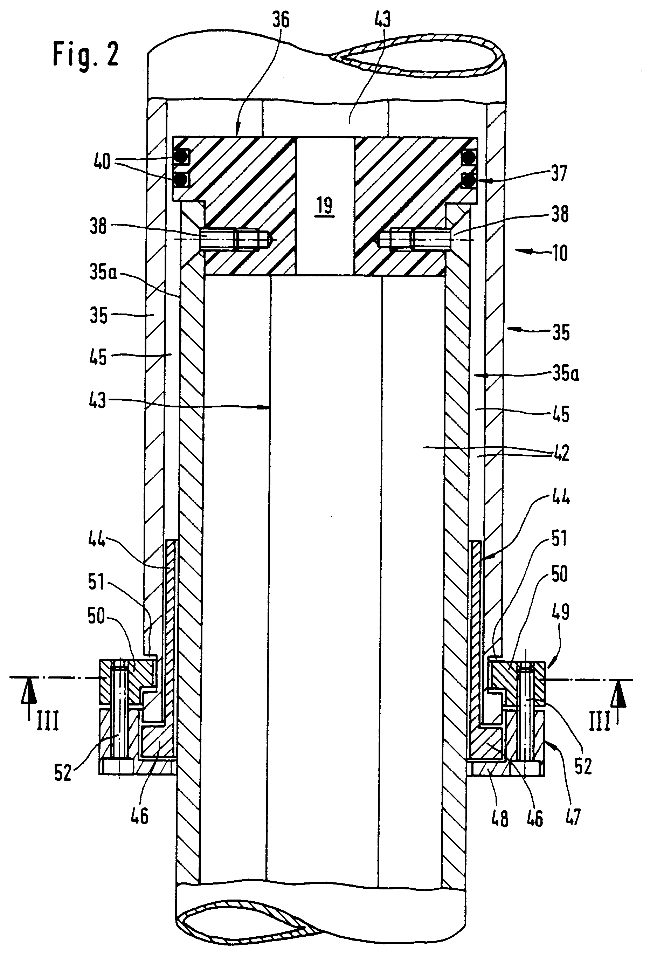

Die Teleskopzylinder 12, 13, 14, einschließlich Basis-Zylinder 11, bestehen deshalb vorteilhafterweise aus dünnwandigen Zylinderrohren 35, 35a aus Aluminium oder vergleichbarem, geeignetem Material. Fig. 2 zeigt als Ausschnitt eines Teleskoporgans 10 das untere Ende eines äußeren Zylinderrohrs 35 und den oberen Bereich eines inneren Zylinderrohrs 35a. Das obere Ende des Zylinderrohrs 35a ist mit einem koobenartigen Kopfstück 36 aus Kunststoff, insbesondere Polyester, versehen. Dieses Material hat selbstschmierende Eigenschaften. Das Kopfstück 36 weist zwei Abschnitte auf, nämlich einen Dichtungsabschnitt 37 am jeweils oberen Ende mit einem Durchmesser, der geringfügig größer ist als der Außendurchmesser des Zylinderrohrs 35a und einen Verbindungsabschnitt 38. Dessen Außendurchmesser entspricht dem Innendurchmesser des Zylinderrohrs 35a und dient zur Befestigung an diesem. Ein oberes Endstück des Zylinderrohrs 35 sitzt passend auf dem Verbindungsabschnitt 38. Zur Befestigung dienen radialgerichtete Befestigungsschrauben 41. Die Verbindung ist zu Wartungs- und Reparaturzwecken leicht lösbar.

Im Bereich des Dichtungsabschnitts 37 ist eine ringsherumlaufende Nut 39 gebildet. In dieser liegt ein elastisches Dichtungsmittel, im vorliegenden Falle ein O-Ring 40. In diesem Bereich erfolgt die Abdichtung des inneren Teleskopzylinders gegenüber dem äußeren. Das Kopfstück 36 ist mit einer (mittigen) axialen Bohrung 19 versehen, die den Durchtritt des Druckmittels (Luft) von einem Teleskopzylinder zum anderen gewährleistet.

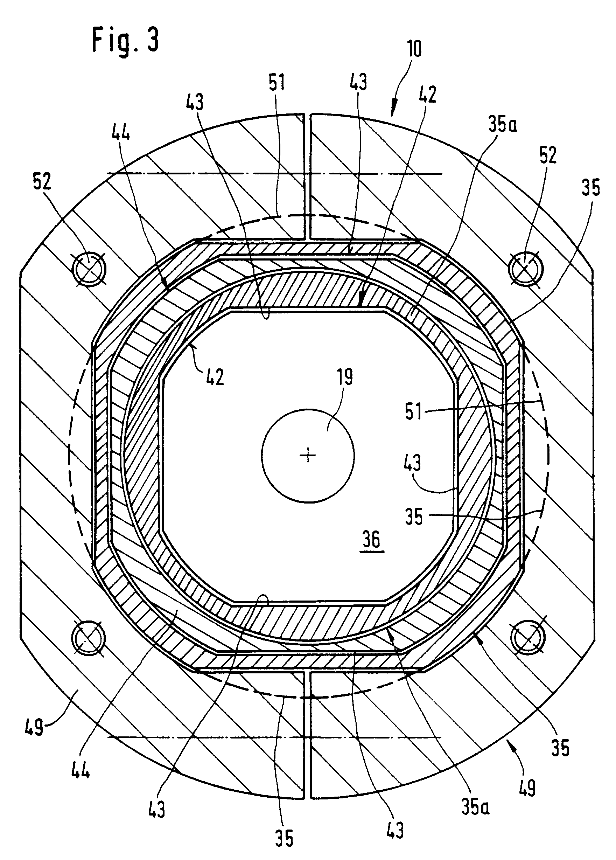

Die Teleskopteile des Teleskoporgans 10, also die Teleskopzylinder 12, 13, 14 .., sind gegen Relativdrehung um ihre Längsachse gesichert. Zu diesem Zweck sind beim vorliegenden Ausführungsbeispiel die Zylinderrohre 35, 35a an mindestens einer Seite, im vorliegenden Falle jeweils innen, unrund ausgebildet mit formschlüssiger wechselseitiger Positionierung. Wie aus Fig. 3 ersichtlich, ist jedes Zylinderrohr 35, 35a im Bereich von Innenflächen 42 mit Abplattungen 43 versehen. Im vorliegenden Falle handelt es sich um örtliche Verdickungen des Zylinderrohrs 35, 35a derart, daß sich in Längsrichtung erstreckende, streifenförmige, ebene Flächen als Abplattungen 43 entstehen. Jedes Zylinderrohr 35, 35a ist mit vier sich paarweise gegenüberliegenden, parallelen Flächen bzw. Abplattungen 43 versehen, so daß das Zylinderrohr 35, 35a einen annähernd achteckigen Querschnitt erhält.

Das in einem Zylinderrohr 35 gelagerte und verschiebbare kleinere Zylinderrohr 35a des benachbarten Teleskopzylinders oder der Kolbenstange 15 ist formschlüssig in dem äußeren Zylinderrohr 35 gelagert. Zu diesem Zweck ist das Kopfstück 36 im Bereich des Dichtungsabschnitts 37 im Querschnitt an die Querschnittsform des äußeren Zylinderrohrs 35 angepaßt. Das Kopfstück 36 ist demnach in Längsrichtung verschiebbar, jedoch in Umfangsrichtung formschlüssig in dem Zylinderrohr 35 gelagert.

Ein innenliegendes Teleskopteil bzw. ein innenliegendes Zylinderrohr 35a (oder die Kolbenstange 15) ist im unteren bzw. freien Endbereich des nächstfolgenden äußeren Zylinderrohrs 35 durch ein gesondertes Stützorgan gehalten, nämlich durch eine Lagerbuchse 44. Diese befindet sich innerhalb eines (annähernd) zylindrischen Spalts 45 zwischen den benachbarten Zylinderrohren 35, 35a. Die Lagerbuchse 44, vorzugsweise aus Kunststoff, ist mit einer zylindrischen Innenfläche ausgebildet, entsprechend der Außenkontur des inneren Zylinderrohrs 35, 35a. Eine Außenfläche ist entsprechend der Innenkontur des äußeren Zylinderrohrs 35 unrund bzw. achteckig ausgebildet. Das äußere Zylinderrohr 35 ist demnach formschlüssig auf der Lagerbuchse 44 abgestützt.

Die Lagerbuchse 44 ist im unteren Bereich des äußeren Zylinderrohrs 35 in Axialrichtung unverschiebbar gelagert. Zu diesem Zweck ist am freien bzw. unteren Ende der Lagerbuchse 44 ein nach außen gerichteter Flansch 46 angebracht. Dieser erstreckt sich unterhalb bzw. außerhalb des freien Endes des äußeren Zylinderrohrs 35. Die Lagerbuchse 44 wird durch einen ringsherumlaufenden Stützring 47 gehalten, der einen nach innen gerichteten Steg 48 aufweist. An diesem liegt die Lagerbuchse 44 mit dem Flansch 46 an.

Der Stützring 47 wird durch einen Spannring 49 gehalten. Dieser ist im vorliegenden Falle geteilt, besteht aus zwei Spannring-Hälften (Fig. 3). Der Spannring 49 tritt mit Vorsprüngen 50 in Haltenuten 51 an der Außenseite des äußeren Zylinderrohrs 35 ein. Die Haltenuten 51 sind lediglich Teilnuten mit der Kontur eines Kreisflächenabschnitts. Vier derartiger Haltenuten 51 sind längs des Umfangs des äußeren Zylinderrohrs 35 verteilt. In diesem Bereich ist der mit einer kreisförmigen Innenkontur ausgebildete Spannring 49 gegen Verschiebungen in Axialrichtung auf dem Zylinderrohr 35 fixiert.

Stützring 47 und Spannring 49 sind durch mehrere längs des Umfangs verteilte Schrauben 52 lösbar miteinander verbunden.

Das endliche Zugorgan 20 ermöglicht eine selbsttätige Überwachung extremer Betriebszustände. Zu diesem Zweck ist die Spannung im Zugorgan 20 meßbar.

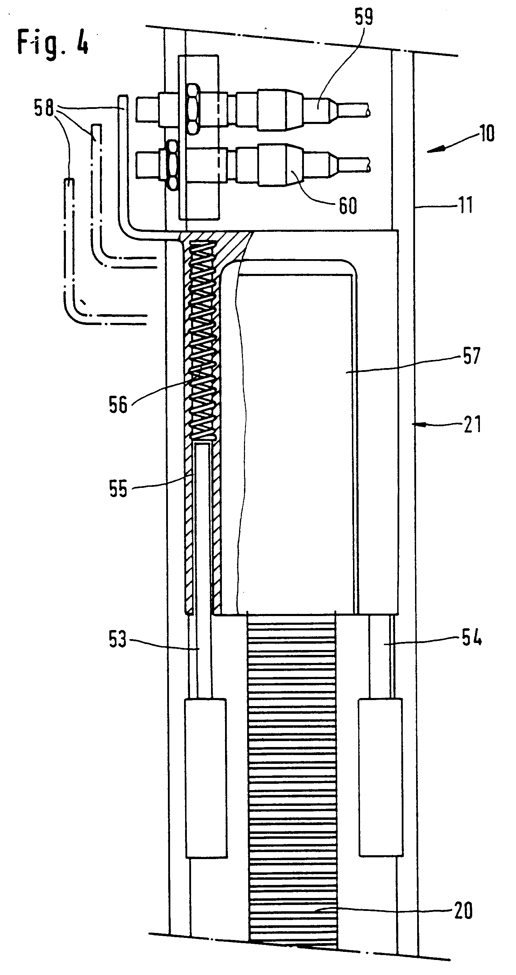

Wie aus Fig. 4 ersichtlich, ist zu diesem Zweck das Ende des Zugorgans elastisch verankert, und zwar durch eine elastische Verschiebbarkeit des Verankerungsstücks 21. Dieses ist als Schlitten ausgebildet und auf (zwei) Führungsstangen 53, 54 gleitend verschiebbar, wenn eine Änderung der Zugkraft im Zugorgan 20 eintritt. Die Führungsstangen 53, 54 sind feststehend gelagert und ragen in passend ausgebildete Bohrungen 55 des Verankerungsstücks 21. In einem Verlängerungsbereich der Bohrungen 55 befindet sich jeweils eine Druckfeder 56 in Gestalt einer Schraubenfeder. Diese wird bei etwaigen Verschiebungen des Verankerungsstücks 21 infolge erhöhter Belastung im Zugorgan 20 durch die zugeordnete Führungsstange 53, 54 zusammengedrückt. Bei Entlastung des Zugorgans 20 kehrt das Verankerungsstück 21 selbsttätig in die Ausgangsposition zurück. Das Ende des Zugorgans 20 ist durch eine Verbindungsplatte 57 mit dem Verankerungsstück 21 verbunden.

Die Relativstellung des Verankerungsstücks 21 wird überwacht. In Extrempositionen wird ein Steuersignal erzeugt, das insbesondere den Antrieb für den Motor 33 stillsetzt.

Bei dem vorliegenden Ausführungsbeispiel ist an dem beweglichen Verankerungsstück 21 seitlich eine Tastfahne 58 angebracht. Diese wirkt zusammen mit ortsfesten berührungslosen Tastorganen, nämlich Initiatoren 59 und 60. Diese sind mit Abstand voreinander und in Bewegungsrichtung der Tastfahne 58 aufeinanderfolgend positioniert.

In einer oberen Stellung (Fig. 4 - ausgezogene Linie) der Tastfahne 58 werden beide Initiatoren 59, 60 beaufschlagt. In dieser Stellung ist das Zugorgan 20 völlig entspannt. Das Handhabungsgerät wird abgeschaltet. In einer mittleren Position wird lediglich ein Initiator 60 durch die Tastfahne 58 beaufschlagt. Dies entspricht dem normalen Betriebszustand des Handhabungsgeräts bei entsprechender Spannung im Zugorgan 20. Steigt diese in unerwünschter Weise soweit an, daß die Tastfahne 58 durch das Verankerungsstück 21 in die untere Position bewegt wird, gelangt diese aus dem Bereich der beiden Initiatoren 59, 60. Auch hieraus kann ein Steuersignal im Sinne einer Abschaltung abgeleitet werden.

Das vorstehend beschriebene Teleskoporgan 10 ist Teil einer komplexen Handhabungsvorrichtung, insbesondere zur Handhabung und zum Transport von Bobinen aus gewickelten Materialbahnen (Verpackungsmaterial). Derartige Bobinen sind üblicherweise mit einer Mittenöffnung versehen. In diese tritt ein Transportzapfen 61 ein. Der Transportzapfen 61 wird innerhalb des Mittenöffnung der Bobine (nicht gezeigt) so verankert, daß jede Relativstellung während des Transports möglich ist, ohne daß die Bobine vom Transportzapfen 61 gleitet.

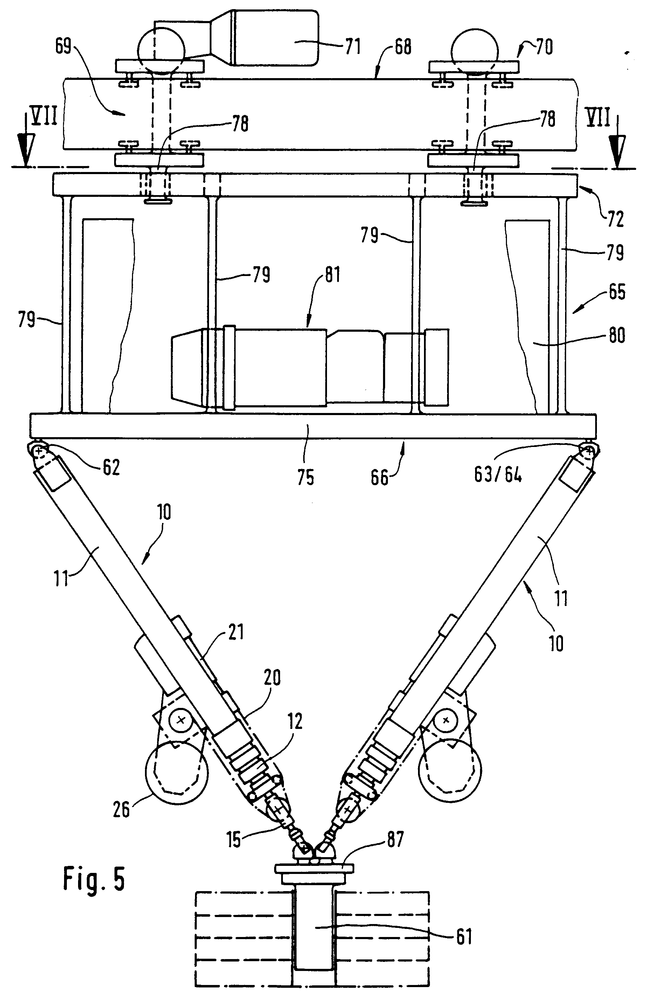

Die Handhabungsvorrichtung gemäß Fig. 5 ff ist mit drei sternförmig positionierten Teleskoporganen 10 versehen. Diese sind in einer nach unten bzw. in Richtung zum Transportzapfen 61 konvergierenden Position angeordnet. Obere Verbindungsgelenke 62, 63 64 sind in gleichen Abständen voneinander an einem Traggestell 65 bzw. unterhalb desselben angebracht.

Unmittelbarer Träger für die Teleskoporgane 10 ist ein Tragrahmen 66, der sich hier in horizontaler Ebene erstreckt. Der Tragrahmen 66 besteht aus Trägern 67, die unter Bildung eines (gleichseitigen) Dreiecks miteinander verbunden sind. An den Eckpunkten des dreieckigen Tragrahmens 66 ist jeweils ein Teleskoporgan 10 gelagert.

Der Tragrahmen ist bei dem Ausführungsbeispiel der Fig. 5 ff mit einem Fahrwerk verbunden, das eine Verfahrbarkeit der Handhabungsvorrichtung entlang einer Tragschiene 68 ermöglicht. Es handelt sich dabei um eine oberhalb von Verpackungsmaschinen oder dergleichen angeordnete, 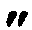 Überkopf"-Förderanlage.

Der Handhabungsvorrichtung sind zwei Laufaggregate 69, 70 zugeordnet, von denen das Laufwerk 69 durch einen Elektromotor 71 angetrieben ist.

Der Tragrahmen 66 bildet den unteren Teils des Traggestells 65. Ein oberer Verbindungsrahmen 72, der sich - wie der Tragrahmen 66 - in horizontaler Ebene erstreckt, dient zur Verbindung des Traggestells 65 mit den Laufwerken 69, 70. Der Verbindungsrahmen 72 besteht aus Längsträgern 73, 74, 75 und Querträgern 76, 77. Der mittlere Längsträger 74 erstreckt sich in der Mittelebene der Tragschiene 68. Die Längsträger 73 und 75 sind parallel hierzu mit gleichen Abständen vom Längsträger 74 angeordnet. Die Laufwerke 69, 70 sind über Tragzapfen 78 mit den Enden des Längsträgers 74 verbunden. Aufrechte Streben 79 jeweils an den Enden der Längsträger 73 und 75 verbinden den oberen Verbindungsrahmen 72 mit dem darunterliegenden Tragrahmen 66.

Das Traggestell 65 dient im vorliegenden Fall zur Aufnahme von Betriebs - und Steuerorganen. Zwischen Tragrahmen 66 und Verbindungsrahmen 72 befindet sich eine komplette Steuereinheit 80 für die Steuerung der Handhabungsvorrichtung, nämlich der Teleskoporgane 10. Desweiteren nimmt das Traggestell 65 ein Druckluftaggregat 81 auf mit Motor und Kompressor zur Erzeugung der Druckluft für den Betrieb der Teleskoporgane. Die vorgenannten Einheiten sind auf der Oberseite des Tragrahmens 66 angeordnet, werden also mit der kompletten Einheit des Handhabungsgeräts verfahren.

Für eine störungsfreie Arbeitsweise der Teleskoporgane 10 sind weitere Maßnahmen getroffen. So ist sichergestellt, daß die Drehbarkeit der Teleskoporgane 10 um ein oberes Drehlager 82 mit vertikaler Drehachse begrenzt ist. Das betreffende Drehlager 82 befindet sich im Tragrahmen 66. Es handelt sich dabei um ein Kugellager.

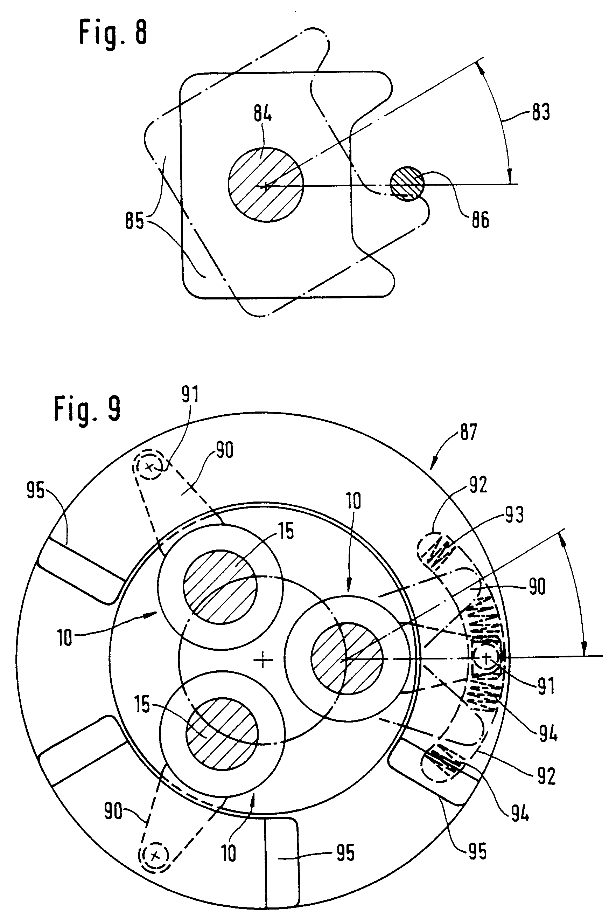

Das Teleskoporgan 10 ist um einen Winkel 83 (Fig. 8) nach beiden Seiten um eine vertikale Achse des Drehlagers 82 drehbar. Die Endstellungen werden jeweils durch Tastorgane überwacht. Ein dem Drehlager 82 zugeordneter Tragzapfen 84 trägt eine quergerichtete Tastscheibe 85. Diese wirkt zusammen mit einem berührungslosen Tastorgan, nämlich einem Initiator 86, der feststehend angebracht ist, nämlich am Tragrahmen 66. Durch die Form der Tastscheibe 85 wird die Endstellung des Teleskoporgans 10 hinsichtlich der Drehbewegung berührungslos begrenzt.

Desweiteren ist vorgesehen, daß auf die (drei) Teleskoporgane 10 der Handhabungsvorrichtung eine Rückstellkraft auf eine mittige, zentrische Ausgangsstellung wirkt. Wie vor allem aus Fig. 9 ersichtlich, sind die unteren Enden der Teleskoporgane 10 mit einem gemeinsamen Halteorgan verbunden, nämlich einer quergerichteten Tragscheibe 87. In dieser sind die Teleskoporgane 10 mit einem nach unten gerichteten, mit der Lasche 17 verbundenen Tragbolzen 88 drehbar, nämlich um eine vertikale Achse, gelagert. In der Tragscheibe 87 werden demnach drei in gleichen Umfangsabständen voneinander angeordnete Drehlager 89 gebildet.

Rückstellkräfte werden auf die Teleskoporgane 10 im drehenden Sinne ausgeübt. Zu diesem Zweck ist an jedem Teleskoporgan 10 ein querabstehender Stützarm 90 angebracht. Dieser ist im vorliegenden Fall mit der Lasche 17 verbunden. Am freien Ende des Stützarms 90 ist ein nach unten gerichtetes Kulissenstück 91 angebracht, welches in einer bogenförmigen Kulisse bzw. Nut 92 der Tragscheibe 87 geführt ist. Das Kulissenstück 91 ist innerhalb der Nut 92 auf beiden Seiten federelastisch beaufschlagt, nämlich durch Druckfedern 93, 94.

Wenn beim Betrieb der Handhabungsvorrichtung infolge unterschiedlicher und/oder Winkelstellung der Teleskoporgane 10 diese Drehbewegungen um die vertikale Achse ausführen, wird das Kulissenstück 91 innerhalb der Nut 92 in die eine oder andere Richtung verschoben gegen die Belastung der Druckfeder 93 oder 94. Bei Aufhebung der Belastung der Teleskoporgane 10 wird das Kulissenstück 91 durch die Druckfedern 93, 94 in die Mittenstellung zurückgeführt. Diese entspricht auch einer Mittenstellung der Teleskoporgane 10.

Die vorstehend beschriebenen Organe, insbesondere die Nuten 92, sind durch eine Abdeckkappe 95 auf der Oberseite der Tragscheibe 87 abgedeckt.

## Patentansprüche

1. Handhabungsvorrichtung für Gegenstände, insbesondere Bobinen aus gewickelten Materialbahnen, mit wenigstens einem Teleskoporgan (10) aus einem Basis-Zylinder (11), mehreren ein- und ausfahrbaren, druckmittelbetätigten Teleskopzylindern (12, 13, 14) und einer ebenfalls ein- und ausfahrbaren, druckmittelbetätigten Kolbenstange (15), die in dem inneren bzw. unteren Teleskopzylinder (14) geführt ist, wobei das Teleskoporgan (10) mittels eines endlichen Zugorgans (20) einfahrbar und wobei auf wenigstens ein Ende des Zugorgans (20) eine Zugkraft zum Einfahren des Teleskoporgans (10) übertragbar ist, **gekennzeichnet durch** folgende Merkmale:
a) das Zugorgan (20) läuft über eine an der Kolbenstange (15) mittig angebrachte Umlenkrolle (23), wobei die Drehachse der Umlenkrolle (23) in der Längsmittelachse des Teleskoporgans (10) liegt,
b) das Zugorgan (20) ist mit einem Ende fest verankert und hierzu unmittelbar mit dem Teleskoporgan (10) verbunden, nämlich an der Außenseite des äußeren bzw. oberen Basis-Zylinders (11) befestigt,
c) das Zugorgan (20) ist mit dem anderen Ende auf eine Wickeltrommel (26) aufwickelbar und von dieser abwickelbar, wobei die Wickeltrommel (26) ebenfalls am Teleskoporgan (10) angebracht ist, nämlich auf der zum fest verankerten Ende des Zugorgans (20) diametral gegenüberliegenden Seite an der Außenseite des Basis-Zylinders (11).

2. Handhabungsvorrichtung nach Anspruch 1, **dadurch gekennzeichnet**, daß das Zugorgan (20) ein Zahnriemen ist, und daß das Zugorgan (20) annähernd parallele Trums (28, 29) zu beiden Seiten des Teleskoporgans (10) durch Abstützung der Trums (28, 29) an Stützrollen (30, 31) zu beiden Seiten des Teleskoporgans (10) bildet.

3. Handhabungsvorrichtung nach Anspruch 1, **dadurch gekennzeichnet**, daß die Ausfahrlänge des Teleskoporgans (10) bzw. dessen Relativstellung anhand der Ein- und Ausfahrlänge des Zugorgans (20) meßbar ist, insbesondere durch einen Winkelschrittgeber, der anhand der Umdrehungen eines Umlenkrades (25) für das Zugorgan (20) die ein- bzw. ausgefahrene Länge des Zugorgans (20) ermittelt, und daß das Teleskoporgan in Abhängigkeit von dem Meßergebnis steuerbar ist.

4. Handhabungsvorrichtung nach Anspruch 1, **dadurch gekennzeichnet**, daß ein Ende des Zugorgans (20) elastisch verankert ist, insbesondere in einem gegen Federkraft verschiebbaren Verankerungsstück (21), wobei vorzugsweise dem Ende des Zugorgans (20) bzw. dem Verankerungsstück (21) Meßorgane zum Abtasten der Relativstellung des Verankerungsstücks (21) nach Maßgabe der Zugspannung im Zugorgan (20) zugeordnet sind.

5. Handhabungsvorrichtung nach Anspruch 1, **dadurch gekennzeichnet**, daß das Umlenkrad (23) im Bereich eines Endstücks (16) der Kolbenstange (15) zwischen Stegen zentrisch zu der Längsmittelachse des Teleskoporgans (10) mit einer quergerichteten Drehachse gelagert ist.

6. Handhabungsvorrichtung nach Anspruch 1, **dadurch gekennzeichnet**, daß die Teleskopteile, insbesondere die Teleskopzylinder (11, 12, 13), durch miteinander korrespondierende Formgebung unverdrehbar ineinander geführt sind, und daß die korrespondierende Formgebung durch Abplattungen (43) an Innenflächen (42) und/oder Außenflächen von Zylinderrohren (35, 35a) benachbarter Teleskopzylinder (12, 13, 14) gegeben ist.

7. Handhabungsvorrichtung nach Anspruch 6, **dadurch gekennzeichnet**, daß das äußere Zylinderrohr (35) jeweils im unteren bzw. freien Endbereich durch eine zwischen den beiden benachbarten Zylinderrohren (35, 35a) angeordnete Lagerbuchse (44) auf dem inneren Zylinderrohr (35a) abgestützt ist, und daß die Kontur der Lagerbuchse (44) der Kontur des jeweils anliegenden Zylinderrohrs (35, 35a) entspricht, derart, daß die Lagerbuchse (44) mit einer die Abplattung (43) aufweisenden Außenfläche und/oder Innenfläche versehen ist.

8. Handhabungsvorrichtung nach Anspruch 6 oder 7, **dadurch gekennzeichnet**, daß die Innenfläche (42) der Zylinderrohre (35, 35a) vier längs des Umfangs gleichmäßig verteilt angeordnete Abplattungen (43) aufweist.

9. Handhabungsvorrichtung nach einem oder mehreren der Ansprüche 6 bis 8, **dadurch gekennzeichnet**, daß jeder Teleskopzylinder (12, 13, 14) und/oder die Kolbenstange (15) am oberen Ende ein als Kolben ausgebildetes Kopfstück (36) aufweist, insbesondere aus Kunststoff, wobei das Kopfstück (36) mit einem Verbindungsabschnitt (38) kleineren Durchmessers im Zylinderrohr (35, 35a) verankert ist und mit einem Dichtungsabschnitt (37) größeren Durchmessers gleitend und formschlüssig an der Innenfläche (42) des äußeren Zylinderrohrs (35) anliegt.

10. Handhabungsvorrichtung nach Anspruch 7**, gekennzeichnet durch** mehrere, insbesondere drei Teleskoporgane (10), deren freie Enden gelenkig mit einer gemeinsamen Halterung für den zu handhabenden Gegenstand, insbesondere einem Tragzapfen (50) für eine Bobine (51), verbunden sind, wobei die freien Enden der Teleskoporgane (10), insbesondere deren Kolbenstange (15), jeweils gelenkig an einem gemeinsamen Träger gelagert sind, nämlich an einer Tragscheibe (87), wobei vorzugsweise an der freien, unteren Seite der Tragscheibe (87) ein Transportzapfen (61) zum Halten von Bobinen angebracht ist.

11. Handhabungsvorrichtung nach Anspruch 10, **dadurch gekennzeichnet**, daß auf die Teleskoporgane (10) eine elastische Rückstellkraft in Richtung auf eine Mittenstellung wirkt, insbesondere durch Druckfedern (93, 94) in einer Nut (92) der Tragscheibe (87).

12. Handhabungsvorrichtung nach Anspruch 10, **dadurch gekennzeichnet**, daß die Teleskoporgane (10) hinsichtlich ihres Drehbereichs um die Längsachse begrenzbar und/oder überwachbar sind, insbesondere durch berührungslose Tastorgane wie Initiatoren (86), die mit einer am Teleskoporgan (10) insbesondere im oberen Bereich angebrachten Tastscheibe (85) zusammenwirken.

13. Handhabungsvorrichtung nach Anspruch 10, **dadurch gekennzeichnet**, daß die Teleskoporgane mit ihren oberen Enden gelenkig an einem Traggestell (65) angebracht sind, welches aus einem unteren, horizontalen Tragrahmen (66) und einem oberen Verbindungsrahmen (72) besteht, wobei der Verbindungsrahmen (72) mit Laufwerken (69, 70) einer Tragschiene (68) und mit dem Tragrahmen (66) über aufrechte Streben (79) verbunden ist.

## Claims

1. Handling apparatus for objects, in particular bobbins of wound material webs, having at least one telescopic member (10) comprising a basic cylinder (11), a plurality of retractable and extendable, pressure-medium-actuated telescopic cylinders (12, 13, 14) and a likewise retractable and extendable, pressure-medium-actuated piston rod (15), which is guided in the inner, or lower, telescopic cylinder (14), it being possible for the telescopic member (10) to be retracted by means of an open-ended tension member (20), and it being possible for a tensile force to be transmitted to at least one end of the tension member (20) in order to retract the telescopic member (10), characterized by the following features:
a) the tension member (20) runs over a deflection roller (23) which is fitted centrally on the piston rod (15), the axis of rotation of the deflection roller (23) being located on the longitudinal central axis of the telescopic member (10),
b) the tension member (20) is anchored fixedly by one end and, for this purpose, is connected directly to the telescopic member (10), namely is fastened on the outside of the outer, or upper, basic cylinder (11),
c) the tension member (20) can be wound up onto a winding drum (26), and unwound therefrom, by the other end, the winding drum (26) likewise being fitted on the telescopic member (10), namely on that side which is located diametrically opposite the fixedly anchored end of the tension member (20), on the outside of the basic cylinder (11).

2. Handling apparatus according to Claim 1, characterized in that the tension member (20) is a toothed belt, and in that the tension member (20) forms approximately parallel strands (28, 29) on both sides of the telescopic member (10) by supporting the strands (28, 29) on supporting rollers (30, 31) on both sides of the telescopic member (10).

3. Handling apparatus according to Claim 1, characterized in that the extension length of the telescopic member (10), or the relative position thereof, can be measured with reference to the retraction and extension length of the tension member (20), in particular by an angular increment transducer which determines the retracted or extended length of the tension member (20) with reference to the revolutions of a deflection wheel (25) for the tension member (20), and in that the telescopic member can be controlled in dependence on the measurement result.

4. Handling apparatus according to Claim 1, characterized in that one end of the tension member (20) is elastically anchored, in particular in an anchorage piece (21) which can be displaced counter to spring force, measuring members for sensing the relative position of the anchorage piece (21) in accordance with the tensile stressing in the tension member (20) being assigned preferably to the end of the tension member (20) or to the anchorage piece (21).

5. Handling apparatus according to Claim 1, characterized in that the deflection wheel (23) is mounted, by means of a transversely directed rotary pin, in the region of an end piece (16) of the piston rod (15), between webs, centrically with respect to the longitudinal central axis of the telescopic member (10).

6. Handling apparatus according to Claim 1, characterized in that the telescopic parts, in particular the telescopic cylinders (11, 12, 13), are guided non-rotatably one inside the other by virtue of mutually corresponding shaping, and in that the corresponding shaping is provided by flattenings (43) on inner surfaces (42) and/or outer surfaces of cylinder tubes (35, 35a) of adjacent telescopic cylinders (12, 13, 14).

7. Handling apparatus according to Claim 6, characterized in that the outer cylinder tube (35) is supported, in the lower or free end region in each case, on the inner cylinder tube (35a) by a bearing bush (44), arranged between the two adjacent cylinder tubes (35, 35a), and in that the contour of the bearing bush (44) corresponds to the contour of the respectively abutting cylinder tube (35, 35a), such that the bearing bush (44) is provided with an outer surface and/or inner surface which exhibits the flattening (43).

8. Handling apparatus according to Claim 6 or 7, characterized in that the inner surface (42) of the cylinder tubes (35, 35a) exhibits four flattenings (43) distributed uniformly along the circumference.

9. Handling apparatus according to one or more of Claims 6 to 8, characterized in that each telescopic cylinder (12, 13, 14) and/or the piston rod (15) exhibits, at the upper end, a head piece (36) designed as a piston, in particular consisting of plastic, the head piece (36) being anchored in the cylinder tube (35, 35a) by means of a connecting portion (38) of smaller diameter and resting, in a sliding and positively locking manner, on the inner surface (42) of the outer cylinder tube (35) by means of a sealing portion (37) of greater diameter.

10. Handling apparatus according to Claim 7, characterized by a plurality of, in particular three, telescopic members (10), whose free ends are connected in an articulated manner to a common securing means for the object which is to be handled, in particular to a load-bearing pin (50) for a bobbin (51), the free ends of the telescopic members (10), in particular the piston rod (15) thereof, each being mounted in an articulated manner on a common carrier, namely on a load-bearing disc (87), a transporting pin (61) for retaining bobbins being fitted preferably on the free, lower side of the load-bearing disc (87).

11. Handling apparatus according to Claim 10, characterized in that an elastic restoring force acts on the telescopic members (10), in the direction of a central position, in particular by means of compression springs (93, 94) in a groove (92) of the load-bearing disc (87).

12. Handling apparatus according to Claim 10, characterized in that the telescopic members (10) can be restricted and/or monitored in terms of their rotary range about the longitudinal axis, in particular by contactless sensing members, such as initiators (86), which interact with a sensing disc (85) fitted on the telescopic member (10), in particular in the upper region.

13. Handling apparatus according to Claim 10, characterized in that the telescopic members are fitted, by means of their upper ends, in an articulated manner on a load-bearing framework (65) which comprises a lower, horizontal load-bearing frame (66) and an upper connecting frame (72), the connecting frame (72) being connected to running mechanisms (69, 70) of a load-bearing rail (68) and to the load-bearing frame (66), via upright struts (79).

## Revendications

1. Dispositif de manipulation d'objets, en particulier de bobines de bandes de matériau enroulées, comportant au moins un organe télescopique (10) constitué d'un cylindre de base (11), de plusieurs cylindres télescopiques (12, 13, 14) pouvant rentrer et sortir et actionnés par un fluide sous pression et d'une tige de piston (15) également pouvant rentrer et sortir et actionnée par un fluide sous pression qui est guidée dans le cylindre télescopique intérieur ou inférieur (14), l'organe télescopique (10) pouvant être rentré au moyen d'un organe tracteur fini (20), et à au moins une extrémité de cet organe tracteur (20) pouvant être transmise une force de traction pour la rentrée de l'organe télescopique (10), caractérisé par les caractéristiques suivantes :
a) l'organe tracteur (20) passe sur un rouleau de renvoi (23) monté au milieu sur la tige de piston (15), l'axe de rotation de ce rouleau de renvoi (23) étant situé sur l'axe longitudinal de l'organe télescopique (10),
b) l'organe tracteur (20) est ancré de manière fixe à une extrémité et pour cela joint directement à l'organe télescopique (10), à savoir fixé sur le côté extérieur du cylindre de base extérieur ou supérieur (11),
c) l'organe tracteur (20) peut, à son autre extrémité, être enroulé sur un tambour d'enroulement (26) et déroulé de celui-ci, ce tambour d'enroulement (26) étant également monté sur l'organe télescopique (10), à savoir sur le côté extérieur du cylindre de base (11) sur le côté diamétralement opposé à l'extrémité ancrée de manière fixe de l'organe tracteur (20).

2. Dispositif de manipulation selon la revendication 1, caractérisé par le fait que l'organe tracteur (20) est une courroie dentée et forme des brins approximativement parallèles (28, 29) des deux côtés de l'organe télescopique (10) par appui de ces brins (28, 29) sur des rouleaux d'appui (30, 31) des deux côtés de l'organe télescopique (10).

3. Dispositif de manipulation selon la revendication 1, caractérisé par le fait que la longueur de sortie de l'organe télescopique (10) ou la position relative de celui-ci peut être mesurée à l'aide de la longueur de rentrée et de sortie de l'organe tracteur (20), en particulier par un transmetteur de pas angulaires qui détermine la longueur rentrée ou sortie de l'organe tracteur (20) à l'aide du nombre de tours d'une roue de renvoi (25) pour l'organe tracteur (20), et que l'organe télescopique peut être commandé en fonction du résultat de la mesure.

4. Dispositif de manipulation selon la revendication 1, caractérisé par le fait qu'une extrémité de l'organe tracteur (20) est ancrée élastiquement, en particulier dans une pièce d'ancrage (21) mobile contre l'action d'un ressort, de préférence, à l'extrémité de l'organe tracteur (20) ou à la pièce d'ancrage (21), étant adjoints des organes de mesure pour la lecture de la position relative de la pièce d'ancrage (21) d'après la mesure de la tension de l'organe tracteur (20).

5. Dispositif de manipulation selon la revendication 1, caractérisé par le fait que la roue de renvoi (23) est montée dans la zone d'une pièce d'extrémité (16) de la tige de piston (15) entre des nervures, centrée sur l'axe longitudinal de l'organe télescopique (10) avec un axe de rotation dirigé transversalement.

6. Dispositif de manipulation selon la revendication 1, caractérisé par le fait que les parties télescopiques, en particulier les cylindres télescopiques (12, 13, 14), sont guidés les uns dans les autres sans possibilité de rotation relative par une forme correspondante, et que la forme correspondante est donnée par des plats (43) sur les faces intérieures (42) et/ou les faces extérieures de tubes cylindriques (35, 35a) des cylindres télescopiques voisins (12, 13, 14).

7. Dispositif de manipulation selon la revendication 6, caractérisé par le fait que le tube cylindrique extérieur (35) est supporté dans sa partie d'extrémité inférieure ou libre par le tube cylindrique intérieur (35a) par un coussinet (44) placé entre les deux tubes cylindriques voisins (35, 35a), et que le contour du coussinet (44) correspond au contour de chaque tube cylindrique appuyé (35, 35a), de façon telle que le coussinet (44) est pourvu d'une face extérieure et/ou d'une face intérieure présentant le plat (43).

8. Dispositif de manipulation selon l'une des revendications 6 et 7, caractérisé par le fait que la face intérieure (42) des tubes cylindriques (35, 35a) présente quatre plats (43) répartis uniformément le long de la circonférence.

9. Dispositif de manipulation selon une ou plusieurs des revendications 6 à 8, caractérisé par le fait que chaque cylindre télescopique (12, 13, 14) et/ou la tige de piston (15) présente, à son extrémité supérieure, une pièce de tête (36) formant piston, en particulier en plastique, cette pièce de tête (36) étant ancrée dans le tube cylindrique (35, 35a) par une partie d'assemblage (38) de plus petit diamètre, et s'appuyant glissante et encastrée sur la face intérieure (42) du tube cylindrique extérieur (35) par une partie d'étanchéité (37) de plus grand diamètre.

10. Dispositif de manipulation selon la revendication 7, caractérisé par plusieurs, en particulier trois, organes télescopiques (10) dont les extrémités libres sont articulées à un support commun pour l'objet à manipuler, en particulier à un axe support (50) pour une bobine (51), les extrémités libres des organes télescopiques (10), en particulier de leur tige de piston (15), étant montées de manière articulée sur un support commun, à savoir sur un disque support (87), de préférence, sur le côté libre inférieur de ce disque support (87) étant prévu un axe de transport (61) pour la fixation de bobines.

11. Dispositif de manipulation selon la revendication 10, caractérisé par le fait qu'une force de rappel élastique agit en direction d'une position milieu sur les organes télescopiques (10), en particulier par des ressorts de compression (93, 94) placés dans une rainure (92) du disque support (87).

12. Dispositif de manipulation selon la revendication 10, caractérisé par le fait que le domaine de rotation des organes télescopiques (10) autour de leur axe longitudinal peut être limité ou contrôlé, en particulier par des organes de palpage sans contact tels que déclencheurs (86) qui coopèrent avec une plaque de palpage (85) montée sur l'organe télescopique (10) en particulier dans la partie supérieure de celui-ci.

13. Dispositif de manipulation selon la revendication 10, caractérisé par le fait que les organes télescopiques sont, à leur extrémité supérieure, montés de manière articulée sur un bâti support (65) qui est constitué d'un cadre support inférieur horizontal (66) et d'un cadre supérieur de jonction (72), le cadre de jonction (72) étant joint à des mécanismes de roulement (69, 70) d'un rail porteur (68) et au cadre support (66) par des jambes verticales (79).
